# EUROPEAN PATENT SPECIFICATION

(11) **EP 0 733 818 B1**
(45) Date of publication and mention of the grant of the patent: **03.05.2000**
(21) Application number: 96200604.5
(22) Date of filing: 05.03.1996
(51) Int. Cl.: F16D 13/58

(54) **A clutch structure for motor vehicles**
Kupplungsaufbau für Kraftfahrzeuge
Structure d'embrayage pour véhicules

(30) Priority: 22.03.1995 IT MI950571
(43) Date of publication of application: 25.09.1996
(73) Proprietor: MEC.ARM. S.r.l., 81100 Caserta (IT)
(72) Inventor: Caporaso, Giuseppe, I-81026 Recale (Caserta) (IT)
(74) Representative: De Nova, Roberto

(56) References cited:
- DE-A- 4 010 335
- FR-A- 2 305 638
- FR-A- 2 456 879
- FR-A- 2 480 377
- GB-A- 2 068 062

## Description

The present invention relates to a clutch structure for motor vehicles according to the preamble of claim 1 (see GB-A-2 068 062).

As is known, in clutches of the specified type, it is necessary to attach the diaphragm spring firmly to the cover so that it pivots between a cover-side contact, which is operative when the clutch is engaged, and a plate-side contact which is operative when the clutch is released.

In a known solution, the diaphragm spring is held between two toroidal steel rings constituting the cover-side contact and the plate-side contact respectively, the toroidal rings being fitted onto a plurality of mushroom-shaped pins which are rivetted to the cover. This solution, although advantageous in many ways, suffers from having a large number of parts, including the pins of which there are generally no less than six and usually nine, as well as the two toroidal rings.

As is understandable, the large number of parts affects not only the cost of manufacturing the clutch, which is high, but also its operation, the clutch being susceptible to breakdown.

The problem upon which the present invention is based is that of providing a clutch structure which satisfies the aforesaid requirements while at the same time overcoming the disadvantages cited with reference to the prior art.

This problem is resolved by a clutch structure according to claim 1.

Further characteristics and advantages of the clutch structure according to the present invention will become clearer from the following description of one embodiment of it, given purely by way of non-limitative example, with reference to the appended drawings, in which:
Figure 1 is a transverse sectional view of a clutch structure according to the invention, taken on the line I-I;
Figure 2 is an elevational view of a detail of the clutch structure of Figure 1 taken in the direction of the arrow II;
Figure 3 is an elevational view of a detail of the clutch structure of Figure 1 during its manufacture;
Figure 4 is a transverse sectional view of the detail of Figure 3, taken on the line IV-IV;
Figure 5 is an elevational view of the detail of Figure 3, in a subsequent stage in its manufacture; and
Figure 6 is a transverse sectional view of the detail of Figure 5, taken on the line VI-VI.

With reference to the appended drawings, a clutch structure having an axis X-X is generally indicated 1 and is intended to connect a shaft 2 of a gear 3 for rotation with a flywheel 4 of an engine 5 or to disengage them according to whether or not a clutch pedal 6 is, or is not, actuated.

The clutch 1 includes a disc 7 held between the flywheel 4 and a pressure plate 8.

Reference numeral 9 indicates a cover made by drawing steel sheet of predetermined thickness, which includes an outer peripheral edge 10 provided with a flange 11 for fixing to the flywheel 4 and a circular, inner peripheral edge 12 diameter D, which defines a circular aperture 13 through which the shaft 2 extends.

The clutch 1 includes a diaphragm spring 14 pivoted in its central region 14a on the cover 9 between a contact 15 on its side facing the plate 8 and a contact 16 on its side adjacent the cover 9.

When the clutch is engaged, the central region 14a of the diaphragm spring 14 presses against the cover-side abutment 16 while its outer peripheral portion 14b urges the pressure plate 8 constantly towards the flywheel 4.

When the clutch is released, an inner peripheral portion 14c of the diaphragm spring 14 is acted upon by the pedal 6 so that the central region 14a of the spring 14 presses against the plate-side contact 15, at the same time freeing the external peripheral portion 14b from the pressure plate 8.

The plate-side contact 15 is in the form of an annular projection 17 made by drawing an annular body 18 which is structurally independent of the cover 9.

The annular body 18 has a plurality of appendages 20, nine in the example, projecting from its inner edge 19 and formed integrally therewith, the appendages being arranged circumferentially at regular angular intervals of P = 40° around the inner edge 19.

The appendages 20 each have a first portion 21 which extends axially through a circular window 22 in the diaphragm spring 14 and is inserted through the circular aperture 13 of the cover 9 with limited radial clearance from the inner peripheral edge 12 of the cover itself. In this way the annular body 18 is engaged with the cover 9 so as to be centered coaxially on it.

The appendages 20 each have a second portion 23 constituting an end portion which is bent radially outwardly at right angles against the cover. The appendages 20 are thus hooked onto the cover 9 and the annular body 18 is retained axially on the cover.

The cover-side contact 16 is in the form of an annular projection 24 formed by drawing the cover itself.

It should be noted that the first portions 21 of the appendages 20 engage the windows 22 along their diameters, with limited clearance, in such a way that the diaphragm spring 14 is coupled to the annular body 18 so as to be centred on it and fixed for rotation therewith, with limited circumferential clearance.

The clutch 1 also includes a keyed coupling 25 between the annular body 18 and the cover 9 for uniting the annular body 18 for rotation with the cover 9, particularly during passage between the clutch-engaged and the clutch-released conditions.

The coupling 25 comprises a key 26 in the form of a projection on the inner peripheral edge 12 of the cover 9 formed by die-cutting, and a recess 27 constituted by the circumferential space between two first portions 21 of adjacent appendages 20.

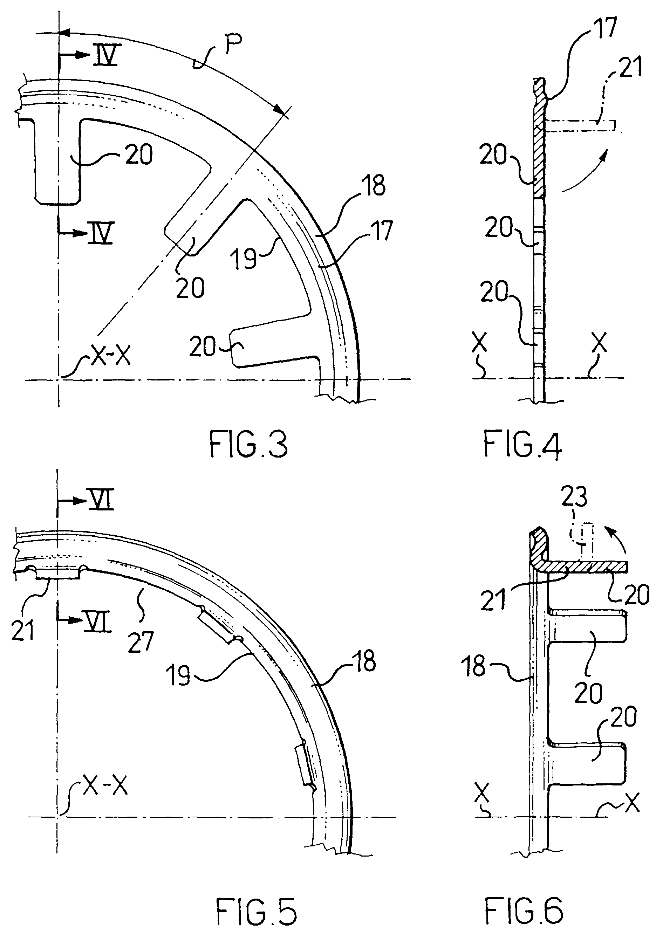

The annular body 18 and the appendages 20 are obtained, to advantage, by die-cutting sheet steel of predetermined thickness, while the projection 17 is obtained by drawing (Figures 3 and 4).

The appendages 20 are then bent at right angles so that their first portions 21 assume their axial configurations (Figures 5 and 6).

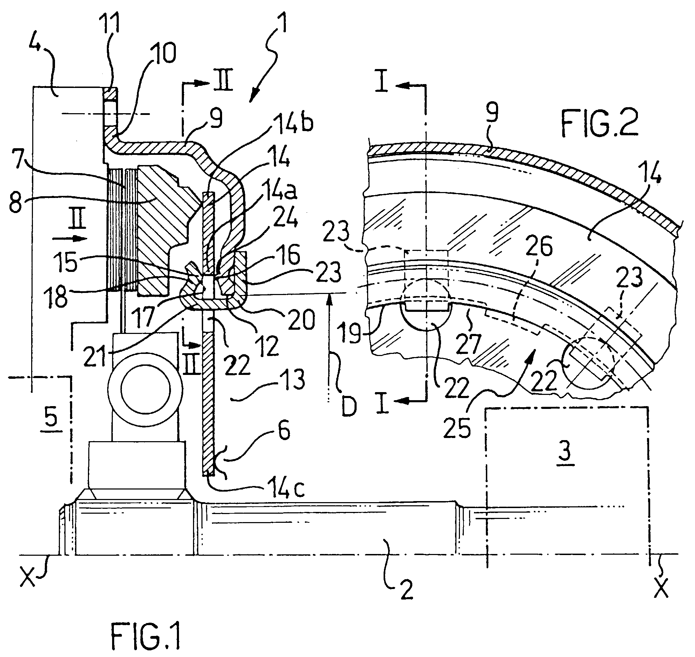

Finally, the projections 20 are again bent at right angles so that their second portions 23 assume their radial configurations hooked onto the cover (Figures 1 and 2).

The clutch 1 according to the invention has the advantage of exceptional structural simplicity, comprising significantly fewer parts and being light in weight.

Its noiselessness is a further advantage.

A long working life, reliability and efficiency can also be expected.

Obviously, an expert in the field may introduce numerous modifications and variants to the clutch described above in order to satisfy specific, contingent requirements, all of which, however, fall within the scope of protection of the invention as defined by the following claims.

## Claims

1. A clutch structure (1) for motor vehicles, of the type including a diaphragm spring (14) pivoted on a cover (9) between a plate-side contact (15) and a cover-side contact (16), the plate-side contact (15) being formed on an annular body (18) that is structurally independent of the cover (9) and has appendages (20) formed integrally therewith, which extend axially through windows (22) in the diaphragm spring (14) and which are inserted through the cover (9) and hooked thereto, characterised in that the appendages (20) have uniform width.

2. A clutch structure (1) according to Claim 1, characterised in that the appendages (20) extend through the windows (22) in the diaphragm spring (14) with limited circumferential clearance.

3. A clutch structure (1) according to Claim 2, characterised in that the appendages (20) are inserted through the cover (9) with limited radial clearance.

4. A clutch structure (1) according to Claim 3, characterised in that the plate-side contact (15) comprises a projection (17) obtained by drawing the annular body (18).

5. A clutch structure (1) according to Claim 4, characterised in that the cover-side contact (16) comprises a projection (24) obtained by drawing the cover (9).

6. A clutch structure (1) according to Claim 5, characterised in that it includes a keyed coupling (25) between the annular body (18) and the cover (9).

## Patentansprüche

1. Kupplungsaufbau (1) für Motorfahrzeuge mit einer Membranfeder (14), die an einer Abdeckung (9) zwischen einem plattenseitigen Kontakt (15) und einem abdeckseitigen Kontakt (16) drehbar gelagert ist,
wobei der plattenseitige Kontakt (15) an einem ringförmigen Körper (18) gebildet ist, der von der Abdeckung (9) strukturell unabhängig ist und der mit ihm zusammenhängend gebildete Anhängglieder (20) aufweist, die sich axial durch Fenster (22) in der Membranfeder (14) hindurch erstrecken und die durch die Abdeckung (9) eingeführt und zu dieser umgebogen sind,
**dadurch gekennzeichnet**, dass die Anhängglieder (20) eine gleichmäßige Breite aufweisen.

2. Kupplungsaufbau (1) nach Anspruch 1,
**dadurch gekennzeichnet**, dass die Anhängglieder (20) sich durch die Fenster (22) in der Membranfeder (14) mit begrenztem Umfangsspielraum erstrecken.

3. Kupplungsaufbau (1) nach Anspruch 2,
**dadurch gekennzeichnet**, dass die Anhängglieder (20) durch die Abdeckung (9) mit begrenztem radialen Spielraum eingeführt sind.

4. Kupplungsaufbau (1) nach Anspruch 3,
**dadurch gekennzeichnet**, dass der plattenseitige Kontakt (15) einen Vorsprung (17) umfaßt, der durch Ziehen des ringförmigen Körpers (18) erhalten ist.

5. Kupplungsaufbau (1) nach Anspruch 4,
**dadurch gekennzeichnet**, dass der abdeckseitige Kontakt (16) einen Vorsprung (24) umfaßt, der durch Ziehen der Abdeckung (9) erhalten ist.

6. Kupplungsaufbau (1) nach Anspruch 5,
**dadurch gekennzeichnet**, dass er zwischen dem ringförmigen Körper (18) und der Abdeckung (9) eine Keilverbindung (25) aufweist.

## Revendications

1. Structure d'embrayage (1) pour des véhicules à moteur, du type comprenant un ressort à diaphragme (14) qui pivote sur un couvercle (9) entre un contact du côté plateau (15) et un contact du côté couvercle (16), le contact du côté plateau (15) étant formé sur un corps annulaire (18) qui est structurellement indépendant du couvercle (9) et possède des appendices (20) formés d'un seul tenant avec celui-ci, qui s'étendent axialement à travers des fenêtres (22) dans le ressort à diaphragme (14) et qui sont insérés à travers le couvercle (9) et accrochés dessus, caractérisée en ce que les appendices (20) ont une largeur uniforme.

2. Structure d'embrayage (1) selon la revendication 1, caractérisée en ce que les appendices (20) s'étendent à travers les fenêtres (22) dans le ressort à diaphragme (14) avec un jeu circonférentiel limité.

3. Structure d'embrayage (1) selon la revendication 2, caractérisé en ce que les appendices (20) sont insérés à travers le couvercle (9) avec un jeu radial limité.

4. Structure d'embrayage (1) selon la revendication 3, caractérisée en ce que le contact du côté plateau (15) comporte une saillie (17) obtenue par emboutissage du corps annulaire (18).

5. Structure d'embrayage (1) selon la revendication 4, caractérisée en ce que le contact du côté couvercle (16) comporte une saillie (24) obtenue par emboutissage du couvercle (9).

6. Structure d'embrayage (1) selon la revendication 5, caractérisée en ce qu'elle comporte un accouplement claveté (25) entre le corps annulaire (18) et le couvercle (9).
